# EUROPEAN PATENT APPLICATION

(11) **EP 4 800 500 A1**
(43) Date of publication of application: **02.09.2026**
(21) Application number: 24897392.7
(22) Date of filing: 19.11.2024
(51) Int. Cl.: G05B 23/02

(54) **OPERATION OPTIMIZATION METHOD, OPERATION OPTIMIZATION PROGRAM, AND STORAGE MEDIUM**

(30) Priority: 30.11.2023 JP 2023203183
(71) Applicant: IHI Corporation, Koto-ku Tokyo 135-8710 (JP)
(72) Inventor: MOTEGI, Yusuke, Tokyo 135-8710 (JP); SATOH, Shu, Tokyo 135-8710 (JP); HIRONO, Masaaki, Tokyo 135-8710 (JP)
(74) Representative: Marks & Clerk LLP
(86) International application number: PCT/JP2024/041023
(87) International publication number: WO 2025/115706

(57) **Abstract**

An operation optimization method includes: a step of acquiring a data set including a plurality of parameters and a plurality of factor data and indicating an operation record of a target system; a step of setting a numerical value group of an index to be optimized using at least a part of the plurality of factor data; a step of extracting, from the numerical value group of the index, a first numerical value group included in a first period and a second numerical value group included in a second period; a step of determining a target value by using a variation in the first numerical value group, the target value being a variable for optimizing the second numerical value group; a step of extracting a third numerical value group from the first numerical value group, the third numerical value group being a numerical value group that has achieved the target value; a step of analyzing divergence between a data set corresponding to the third numerical value group and a data set corresponding to the second numerical value group; and a step of outputting result data created using a data set corresponding to the third numerical value group on the basis of the divergence.

## Description

### Technical Field

The present disclosure relates to an operation optimization method, an operation optimization program, and a storage medium.

### Background Art

A technique for simulating an operation of a plant or the like is known. Patent Literature 1 describes a technique for proposing a control parameter using a plant model simulating an operation of the entire plant and a structure model for calculating a temperature distribution or the like of a rotary machine. Patent Literature 2 describes a technique for performing learning of a neural network using input data for learning based on a time response or the like of a model of a control system and a control parameter as teacher data for learning.

### Citation List

### Patent Literature

Patent Literature 1: Japanese Unexamined Patent Publication No. 2021-135871
Patent Literature 2: Japanese Unexamined Patent Publication No. H3-233702

### Summary of Invention

### Technical Problem

In the simulation using the conventional physical model, the physical model tends to be large and complicated. In such a physical model, a simulation load is heavy and a calculation cost increases. As a result, a facility scale, a company, or the like capable of constructing the physical model is limited.

The present disclosure describes a technique capable of reducing a calculation cost of data for optimizing an operation of a target system.

### Solution to Problem

An operation optimization method according to one aspect of the present disclosure is executed by a computer. An operation optimization method includes: an acquisition step of acquiring a data set including a plurality of parameters and a plurality of factor data other than the plurality of parameters and indicating an operation record of a target system; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

### Effects of Invention

According to the present disclosure, it is possible to provide a technique capable of reducing a calculation cost of data for optimizing an operation of a target system.

### Brief Description of Drawings

FIG. 1 is a block diagram illustrating an example of an entire configuration including an operation optimization system.
FIG. 2 is a diagram illustrating an example of data used in an operation optimization system.
FIG. 3 is a diagram illustrating an example of a variation in a first numerical value group and a second numerical value group.
FIG. 4 is a diagram illustrating an example of an extraction result of a third numerical value group.
FIG. 5 is a diagram illustrating an example of result data.
FIG. 6 is a flowchart illustrating an example of operation of an operation optimization device.
FIG. 7 is a diagram illustrating an example of a hardware configuration related to the operation optimization system.

### Description of Embodiments

An operation optimization method according to one aspect of the present disclosure is executed by a computer. An operation optimization method includes: an acquisition step of acquiring a data set including a plurality of parameters and a plurality of factor data other than the plurality of parameters and indicating an operation record of a target system; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

An operation optimization program according to one aspect of the present disclosure causes a computer to execute: an acquisition step of acquiring a data set including a plurality of parameters and a plurality of factor data other than the plurality of parameters and indicating an operation record of a target system; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

A storage medium according to one aspect of the present disclosure is a computer-readable storage medium. A storage medium records an operation optimization program, the program including: an acquisition step of acquiring a data set including a plurality of parameters and a plurality of factor data other than the plurality of parameters and indicating an operation record of a target system; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

In the operation optimization method, the operation optimization program, and the storage medium according to one aspect of the present disclosure, a numerical value group of an index to be optimized is set using at least a part of the plurality of factor data. The first numerical value group in the first period and the second numerical value group in the second period are extracted from the numerical value group of the index. From the variation in the first numerical value group, a target value that is a variable for optimizing the second numerical value group is determined. Then, the third numerical value group that has achieved the target value is extracted from the first numerical value group. On the basis of the divergence between the data set corresponding to the third numerical value group and the data set corresponding to the second numerical value group, result data created using the data set corresponding to the third numerical value group is output. That is, the third numerical value group of the subset that has achieved the target value (has achieved good efficiency) is extracted from the first numerical value group of the universal set, and the data that causes the divergence between the third numerical value group and the second numerical value group is analyzed from the data set including the plurality of parameters and the plurality of factor data. It can be said that the result data based on the divergence is data aimed at the champion data when the efficiency is good. That is, the result data is data that can optimize the operation of the target system. According to the processing of the present disclosure, it is not necessary to create a model such as a physical model, and thus, it is possible to reduce a calculation cost. As a result, the calculation cost of data for optimizing the operation of the target system can be reduced.

In the first extraction step, the first numerical value group may be extracted with the first period as the entire period, and the second numerical value group may be extracted with the second period as the period including the latest time information. In this case, the number of data of the first numerical value group of the universal set can be sufficiently secured, and the second numerical value group based on the latest operation of the target system is extracted. As a result, data for optimizing the latest operation of the target system can be output.

The first extraction step may narrow down at least a part of the plurality of parameters and the plurality of factor data included in the first period and extract the first numerical value group using an extraction condition based on at least a part of the plurality of parameters and the plurality of factor data included in the second period. In this case, the first numerical value group is narrowed down on the basis of at least a part of the plurality of parameters and the plurality of factor data in the second period. That is, the first numerical value group when at least a part of the data set is similar to the data set in the second period is extracted. By using such data, the accuracy of optimizing the operation of the target system can be improved.

The first extraction step may narrow down at least a part of the plurality of parameters and the plurality of factor data included in the first period and extract the first numerical value group on the extraction condition that the plurality of parameters and the plurality of factor data included in the first period are normal. In this case, the first numerical value group is narrowed down on the basis of at least a part of the plurality of normal parameters and the plurality of factor data. That is, the first numerical value group based on the normal data is extracted. By using the normal data, the accuracy of optimizing the operation of the target system can be improved.

Hereinafter, embodiments of the present disclosure will be described with reference to the drawings. In the description of the drawings, the same elements will be given the same reference numerals, and redundant description will be omitted.

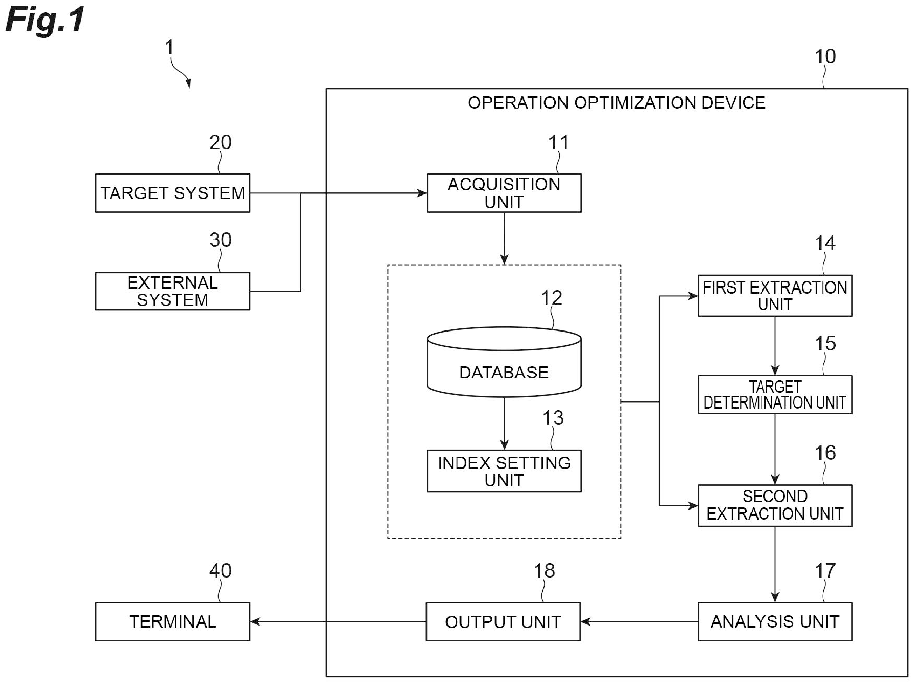

FIG. 1 is a block diagram illustrating an example of an entire configuration including an operation optimization system 1. For example, the operation optimization system 1 includes an operation optimization device 10. The operation optimization device 10 is communicably connected to a target system 20, an external system 30, and a terminal 40.

The target system 20 is, for example, a plant, but is not limited thereto. In the present disclosure, an example will be described in which the target system 20 is a coal fired boiler plant. The target system 20 includes, for example, a plurality of devices (for example, a boiler, a mill, and a soot blower), a control device that controls the plurality of devices, and a plurality of sensors that measure states of the plurality of devices. The target system 20 transmits an internal data set, which is a set of data that can be acquired inside the target system 20, to the operation optimization device 10. The data included in the internal data set is not limited. For example, the internal data set may include a value operated by an operator or the like to operate the target system 20, and a value obtained as a result of operating the target system 20. In one example, the internal data set may include time information, various parameters, material information, fuel information (for example, the type, moisture content, quality, and input amount of fuel), measurement values of a plurality of sensors, yield, power consumption, and the like.

The external system 30 is, for example, a weather forecasting system, but is not limited thereto. The external system 30 transmits an external data set, which is a set of data acquirable outside the target system 20 (for example, the external system 30), to the operation optimization device 10. The data included in the external data set is not limited. For example, the external data set may include values that may be noise regarding the operation of the target system 20. In one example, the external data set may include time information, outside temperature, humidity, weather information, and the like.

The terminal 40 is one or a plurality of computers used by the user of the operation optimization system 1. A type of the terminal 40 is not limited. For example, the terminal 40 may be a personal computer. The terminal 40 may be a multi-function cellular phone (smartphone), a tablet terminal, a wearable terminal, or the like.

The operation optimization device 10 is a device that outputs information for optimizing the operation of the target system 20. The operation optimization device 10 includes a database 12. The operation optimization device 10 includes an acquisition unit 11, an index setting unit 13, a first extraction unit 14, a target determination unit 15, a second extraction unit 16, an analysis unit 17, and an output unit 18 as functional elements.

The database 12 is a non-transitory storage medium or a storage device that stores various types of information used by the operation optimization system 1. The database 12 may be constructed as a single database or may be a set of a plurality of databases. The installation location of the database 12 is not limited. For example, the database 12 may be provided in a computer system different from the operation optimization system 1.

The acquisition unit 11 acquires a data set including a plurality of parameters and a plurality of factor data other than the plurality of parameters and indicating an operation record of the target system 20. The plurality of parameters are values operated by an operator or the like to operate the target system 20. Furthermore, the plurality of parameters may include values calculated on the basis of measurement values of the plurality of sensors. The factor data is data obtained as a result of operating the target system 20, a value that can be noise regarding the operation of the target system 20, and the like. The factor data may include values that are controllable and values that are uncontrollable during the operation of the target system 20. For example, the acquisition unit 11 acquires the internal data set from the target system 20. The acquisition unit 11 acquires the external data set from the external system 30. The acquisition unit 11 creates a data set including a plurality of parameters and a plurality of factor data using the internal data set and the external data set. For example, the acquisition unit 11 may create the data set by combining the internal data set and the external data set on the basis of the time information. The acquisition period and the acquisition interval of the data set are not limited. In one example, the acquisition unit 11 may acquire a data set including a plurality of parameters and a plurality of factor data every 10 minutes for one year or every one minute for half a year. In another example, the acquisition unit 11 may acquire a data set including a plurality of parameters and a plurality of factor data along an optional time series without being limited to a constant interval. The acquisition unit 11 stores the data set in the database 12.

The index setting unit 13 sets a numerical value group of an index to be optimized using at least a part of the plurality of factor data. For example, the index setting unit 13 sets a numerical value group of an index to be optimized using at least a part of the plurality of factor data for each piece of time information. The index to be optimized may be information indicating the operation efficiency of the target system 20. Examples of the index to be optimized include a heat loss, a power generation amount, a CO₂ emission amount, and a steam amount, but are not limited thereto. The index setting unit 13 may receive an input from a user who selects an index to be optimized. The type of the factor data used for calculation may vary according to an index to be optimized. In one example, the index setting unit 13 may calculate the heat loss using measurement values of a plurality of sensors or the like. The heat loss can be expressed as, for example, L1 [kJ/kg]. In another example, the index setting unit 13 may calculate the CO₂ emission amount using the power consumption amount or the like. The index setting unit 13 may store the calculated numerical value group of the index in the database 12.

The index setting unit 13 may set particular factor data of the data set as an index to be optimized. In this case, the index setting unit 13 sets a numerical value group of particular factor data as a numerical value group of an index to be optimized. In one example, the index setting unit 13 may set the yield as an index to be optimized. The index setting unit 13 may set a numerical value group of the yield as a numerical value group of the index to be optimized. That is, the index setting unit 13 need not calculate a new numerical value group according to the index to be optimized.

The first extraction unit 14 extracts, from the numerical value group of the index, a first numerical value group included in a first period that is a predetermined period and a second numerical value group included in a second period that is a part of the first period. For example, the first extraction unit 14 may extract the first numerical value group with the first period as the entire period (for example, one year or half a year). The first extraction unit 14 may extract the second numerical value group with the second period as a period including the latest time information (for example, the latest one week).

The first extraction unit 14 may narrow down at least a part of the plurality of parameters and the plurality of factor data included in the first period and extract the first numerical value group using an extraction condition based on at least a part of the plurality of parameters and the plurality of factor data included in the second period. For example, the first extraction unit 14 may extract the first numerical value group when the numerical value of the particular parameter or the particular factor data included in the first period is within a predetermined range on the basis of the numerical value of the particular parameter or the particular factor data included in the second period. In other words, the first extraction unit 14 may narrow down data when the operation record in the first period and the operation record in the second period are under similar conditions. Here, "similar" may mean that the first numerical value group follows a normal distribution when a particular condition is within a certain range. The first numerical value group may be data according to a continuous distribution or a discrete distribution. In one example, in a case where the mill inlet temperature in the latest time information is x°C, the first extraction unit 14 may extract the first numerical value group when the mill inlet temperature included in the entire period is x±10°C. In other words, the first extraction unit 14 extracts past data when the mill inlet temperature is similar to the latest mill inlet temperature.

The first extraction unit 14 may narrow down at least a part of the plurality of parameters and the plurality of factor data included in the first period and extract the first numerical value group on the extraction condition that the plurality of parameters and the plurality of factor data included in the first period are normal. In other words, the first extraction unit 14 may extract the first numerical value group excluding abnormal data. In one example, the first extraction unit 14 may determine that there is an abnormality in a case where at least a part of the plurality of parameters and the plurality of factor data has not been acquired. In another example, the first extraction unit 14 may determine that there is an abnormality in a case where an outlier is included in at least a part of the plurality of parameters and the plurality of factor data. In still another example, the first extraction unit 14 may determine that there is an abnormality in a case where information (flag or the like) indicating an error is associated in the data set. In still another example, in a case where the user sets a certain period defined as abnormal, the first extraction unit 14 may determine that the period is abnormal.

The target determination unit 15 determines a target value that is a variable for optimizing the second numerical value group by using the variation in the first numerical value group. For example, the target determination unit 15 calculates an average value and a standard deviation of the first numerical value group. The target determination unit 15 determines a value within the standard deviation of the first numerical value group as a target value. In other words, the target determination unit 15 determines a target value expected to improve the operation efficiency of the second numerical value group within a range of the first numerical value group having a track record. That is, the target determination unit 15 determines the target value on the basis of how much improvement of the second numerical value group can be realized. In one example, the target determination unit 15 may determine 1σ in the standard deviation as a target.

The target determination unit 15 may graph the average value and the standard deviation of the first numerical value group, and the second numerical value group, and display them on the terminal 40. The target determination unit 15 may receive an input of a target value from the user. In one example, the target determination unit 15 may graph a section of ±3σ for the variation in the first numerical value group. The target determination unit 15 may receive an input from a user whose target is 1σ.

The second extraction unit 16 extracts a third numerical value group, which is a numerical value group that has achieved the target value, from the first numerical value group. For example, the second extraction unit 16 extracts a third numerical value group separated from the second numerical value group by the target value or more. That is, the second extraction unit 16 extracts, from the first numerical value group, a numerical value group when the operation efficiency is better than that of the second numerical value group as the third numerical value group.

The analysis unit 17 analyzes divergence between the data set corresponding to the third numerical value group and the data set corresponding to the second numerical value group. The "data set corresponding to the numerical value group" refers to a data set including one or a plurality of factor data used for setting the numerical value group. It can also be said that the "data set corresponding to the numerical value group" is a data set obtained by performing reverse lookup from the numerical value group. For example, the analysis unit 17 compares the data set corresponding to the case where the operation efficiency is good (third numerical value group) with the data set of the second numerical value group, and analyzes which data diverges. The diverged data can be said to be data that can contribute to improvement of the operation efficiency of the second numerical value group. The analysis target may be at least a part or all of the plurality of parameters and the plurality of factor data.

The analysis unit 17 may perform analysis using an abnormality diagnosis method when the third numerical value group is assumed to be in a normal state and the second numerical value group is assumed to be in an abnormal state. Examples of the analysis method include, but are not limited to, an MT method (Mahalanobis-Taguchi method), principal component analysis, clustering, and the like. For example, the analysis unit 17 analyzes at least a part of the plurality of parameters and the plurality of factor data in order of contribution using the MT method. The contribution indicates a breakdown of the abnormality score in the MT method. It can be said that the higher the contribution, the more the operation efficiency can be improved. In one example, the analysis unit 17 may analyze that the divergence of the operation interval of the particular soot blower most contributes to the reduction in heat loss (improvement in fuel efficiency).

The output unit 18 outputs the result data created using the data set corresponding to the third numerical value group on the basis of the divergence. For example, the output unit 18 may output, as result data, an average value and a standard deviation calculated using the data set of the third numerical value group for the diverged data. In one example, the output unit 18 may output the average value and the standard deviation as the result data for the operation interval of the particular soot blower. In another example, the output unit 18 may output the calculated average value and standard deviation of the input amount of fuel as result data. The output unit 18 may transmit the result data to the terminal 40 or another device. The output unit 18 may display the result data on a display device included in the operation optimization device 10 or another device.

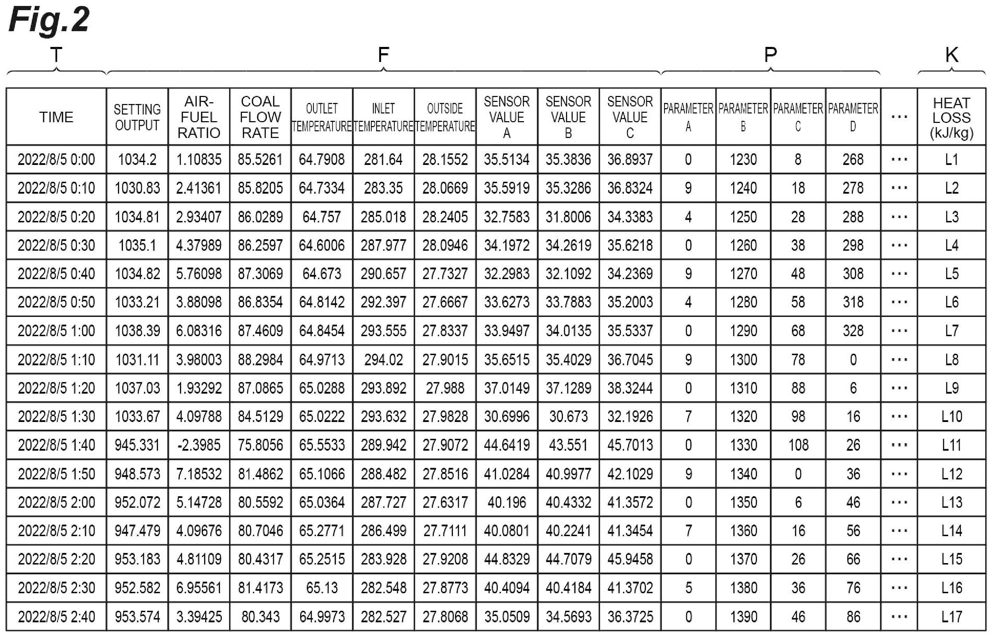

FIG. 2 is a diagram illustrating an example of data used in the operation optimization system 1. The database 12 stores a plurality of parameters P and a plurality of factor data F in association with time information T. The index setting unit 13 sets a numerical value group of an index K to be optimized using at least a part of a plurality of factor data F. FIG. 2 illustrates a heat loss as an example of an index K. As illustrated in FIG. 2, the index K to be optimized is set for each piece of the time information T. In one example, when the time information T is 2022/8/5 0:00, the heat loss is set as L1 [kJ/kg]. Furthermore, in FIG. 2, it can be said that the data set including the plurality of parameters P and the plurality of factor data F is associated with the numerical value of the index K to be optimized for each piece of the time information T. The index setting unit 13 may store the calculated numerical value group of the index in the database 12.

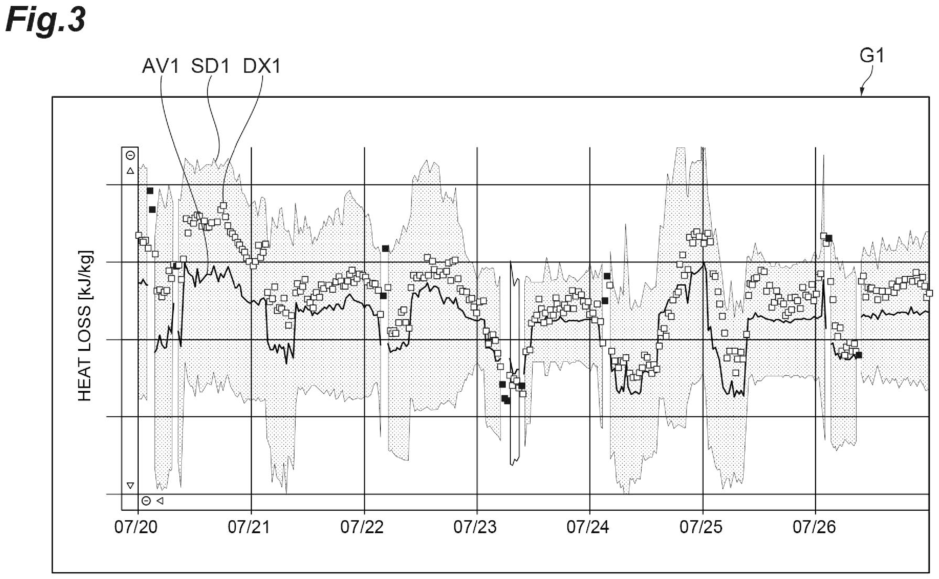

FIG. 3 is a diagram illustrating the variation in the first numerical value group and an example of the second numerical value group. In a graph G1 illustrated in FIG. 3, the vertical axis represents heat loss [kJ/kg], and the horizontal axis represents time. In a graph G1, an average value AV1 of the first numerical value group, a standard deviation SD1 of the first numerical value group, and a second numerical value group DX1 are displayed. The standard deviation SD1 indicates a section of ±3σ. In one example, the target determination unit 15 may determine 1σ as a target value. That is, the target determination unit 15 may determine a value below the average value by 1σ (a value in which the heat loss is improved to be low) as the target value.

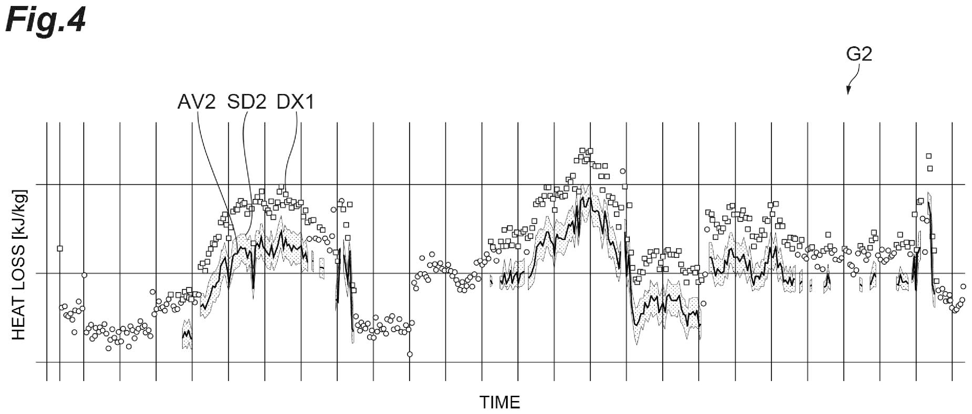

FIG. 4 is a diagram illustrating an example of the extraction result of the third numerical value group. In a graph G2 illustrated in FIG. 4, the vertical axis represents heat loss [kJ/kg], and the horizontal axis represents time. In the graph G2, an average value AV2 of the third numerical value group, a standard deviation SD2 of the third numerical value group, and the second numerical value group DX1 are displayed. The standard deviation SD2 indicates a section of ±3σ. In the example of FIG. 4, the average value AV2 and the standard deviation SD2 of the third numerical value group separated by 1σ or more from the second numerical value group DX1 are displayed. That is, the graph G2 is an example of a result of extracting the third numerical value group having a lower heat loss (better fuel efficiency) than that of the second numerical value group DX1 by 1σ or more and indicating a variation in the third numerical value group.

In the graph G2, the third numerical value group less than 1σ from the second numerical value group DX1 is not extracted. In this case, the average value AV2 and the standard deviation SD2 of the third numerical value group do not appear in the graph G2.

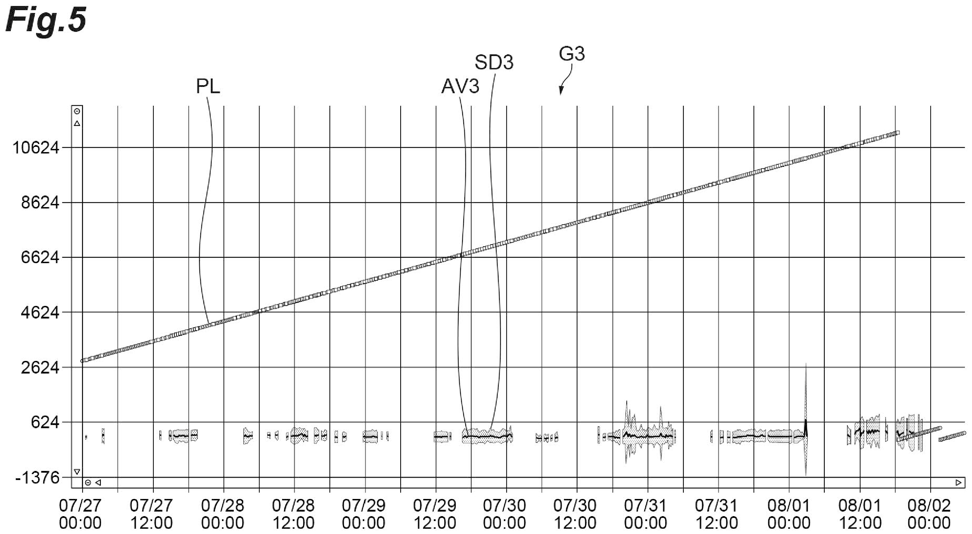

FIG. 5 is a diagram illustrating an example of result data. In a graph G3 illustrated in FIG. 5, the vertical axis represents elapsed time related to the operation of the device, and the horizontal axis represents time. The graph G3 indicates, by a plot PL, an elapsed time during which a particular soot blower corresponding to the second numerical value group operated. Furthermore, the graph G3 indicates an average value AV3 and a standard deviation SD3 of the elapsed time in which the particular soot blower corresponding to the third numerical value group operated. In the graph G3, the average value AV3 is 145 minutes, and the standard deviation SD3 is about ±100 minutes. That is, when the efficiency is good (the third numerical value group), the particular soot blower is operating for about 145 minutes ± 100 minutes. On the other hand, the plot PL of the second numerical value group trends upward. That is, during the period of upward trend, it can be said that time has elapsed without the particular soot blower corresponding to the second numerical value group performing another operation. It can be said that the graph G3 is a graph illustrating a divergence between the operation of the particular soot blower corresponding to the case where the operation efficiency is good (third numerical value group) and the operation of the particular soot blower corresponding to the second numerical value group.

### [Operation Optimization Method]

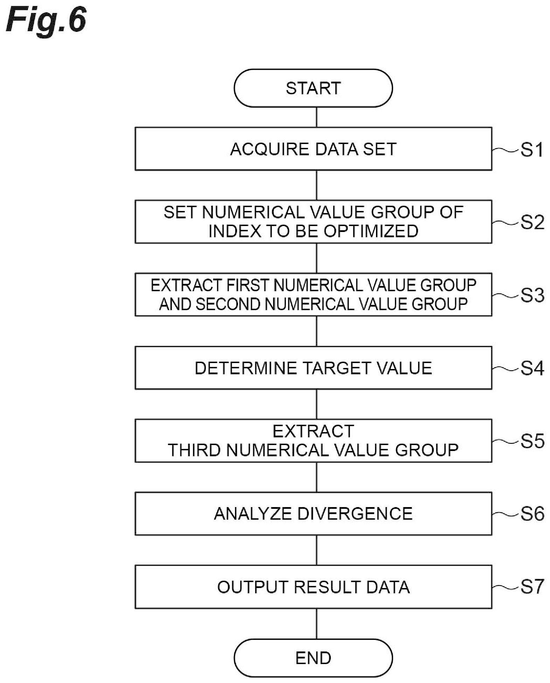

An example of an operation method (operation optimization method) by the operation optimization device 10 will be described with reference to FIG. 6. FIG. 6 is a flowchart illustrating an example of operation of the operation optimization device 10.

In step S1 (acquisition step), the acquisition unit 11 acquires a data set including a plurality of parameters and a plurality of factor data other than the plurality of parameters and indicating an operation record of the target system 20. For example, the acquisition unit 11 acquires the internal data set from the target system 20. The acquisition unit 11 acquires the external data set from the external system 30. The acquisition unit 11 creates a data set including a plurality of parameters and a plurality of factor data using the internal data set and the external data set. The acquisition unit 11 stores the data set in the database 12. In one example, the acquisition unit 11 may store a data set including a plurality of parameters P and a plurality of factor data F as illustrated in FIG. 2 in the database 12.

In step S2 (index setting step), the index setting unit 13 sets a numerical value group of an index to be optimized using at least a part of the plurality of factor data. The index setting unit 13 may receive an input from a user who selects an index to be optimized. The type of the factor data used for calculation may vary according to an index to be optimized. The index setting unit 13 may store the calculated numerical value group of the index in the database 12.

The index setting unit 13 may set particular factor data of the data set as an index to be optimized. In this case, the index setting unit 13 sets a numerical value group of particular factor data as a numerical value group of an index to be optimized.

In step S3 (first extraction step), the first extraction unit 14 extracts, from the numerical value group of the index, a first numerical value group included in a first period that is a predetermined period and a second numerical value group included in a second period that is a part of the first period.

The first extraction unit 14 may narrow down at least a part of the plurality of parameters and the plurality of factor data included in the first period and extract the first numerical value group using an extraction condition based on at least a part of the plurality of parameters and the plurality of factor data included in the second period.

The first extraction unit 14 may narrow down at least a part of the plurality of parameters and the plurality of factor data included in the first period and extract the first numerical value group on the extraction condition that the plurality of parameters and the plurality of factor data included in the first period are normal. In other words, the first extraction unit 14 may extract the first numerical value group excluding abnormal data.

In step S4 (target determination step), the target determination unit 15 determines a target value that is a variable for optimizing the second numerical value group by using the variation in the first numerical value group. For example, the target determination unit 15 calculates an average value and a standard deviation of the first numerical value group. The target determination unit 15 determines a value within the standard deviation of the first numerical value group as a target value.

The target determination unit 15 may graph the average value and the standard deviation of the first numerical value group and the second numerical value group and display them on the terminal 40. The target determination unit 15 may receive an input of a target value from the user. In one example, the target determination unit 15 may display the graph illustrated in FIG. 3 on the terminal 40.

In step S5 (second extraction step), the second extraction unit 16 extracts the third numerical value group, which is a numerical value group that has achieved the target value, from the first numerical value group. For example, the second extraction unit 16 extracts a third numerical value group separated from the second numerical value group by the target value or more. That is, the second extraction unit 16 extracts, from the first numerical value group, a numerical value group when the operation efficiency is better than that of the second numerical value group as the third numerical value group. In one example, the second extraction unit 16 may extract the third numerical value group as illustrated in FIG. 4.

In step S6 (analysis step), the analysis unit 17 analyzes divergence between the data set corresponding to the third numerical value group and the data set corresponding to the second numerical value group. For example, the analysis unit 17 compares the data set corresponding to the case where the operation efficiency is good (third numerical value group) with the data set corresponding to the second numerical value group, and analyzes which data diverges. The analysis unit 17 may perform analysis using an abnormality diagnosis method when the third numerical value group is assumed to be in a normal state and the second numerical value group is assumed to be in an abnormal state.

In step S7 (output step), the output unit 18 outputs the result data created using the data set corresponding to the third numerical value group on the basis of the divergence. For example, the output unit 18 may output the calculated average value and standard deviation as result data for the diverged data. The output unit 18 may transmit the result data to the terminal 40 or another device. The output unit 18 may display the result data on a display device included in the operation optimization device 10 or another device. In one example, the output unit 18 may output result data as illustrated in FIG. 5.

### [Hardware Configuration]

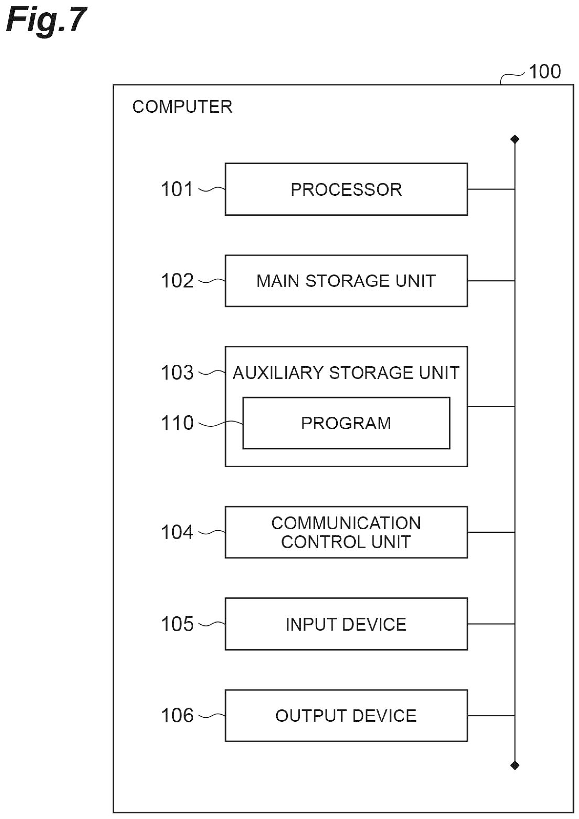

FIG. 7 is a diagram illustrating an example of a hardware configuration related to the operation optimization system 1. FIG. 7 illustrates a computer 100 functioning as the operation optimization device 10. The computer 100 includes a processor 101, a main storage unit 102, an auxiliary storage unit 103, a communication control unit 104, an input device 105, and an output device 106. The operation optimization device 10 includes one or a plurality of computers 100 configured by these pieces of hardware and software such as a program.

In a case where the operation optimization device 10 includes a plurality of computers 100, these computers 100 may be locally connected or may be connected via a communication network such as the Internet or an intranet. With this connection, one operation optimization device 10 is logically constructed.

The processor 101 is a CPU (central processing unit) that executes an operating system, an application program, and the like. The main storage unit 102 includes a ROM (read only memory) and a RAM (random access memory). The auxiliary storage unit 103 is a storage medium including a hard disk, a flash memory, and the like. Generally, the auxiliary storage unit 103 stores a larger amount of data than the main storage unit 102. The communication control unit 104 includes a network card or a wireless communication module. At least a part of the communication function of the operation optimization device 10 with another device may be implemented by the communication control unit 104. The input device 105 includes a keyboard, a mouse, a touch panel, a voice input microphone, and the like. The output device 106 includes a display, a printer, and the like.

The auxiliary storage unit 103 stores a program 110 (operation optimization program) and data necessary for processing in advance. The program 110 causes the computer 100 to execute each functional element of the operation optimization device 10. For example, the processing according to the operation optimization method described above is executed in the computer 100 by the program 110. For example, the program 110 is read by the processor 101 or the main storage unit 102, and causes at least one of the processor 101, the main storage unit 102, the auxiliary storage unit 103, the communication control unit 104, the input device 105, and the output device 106 to operate. For example, the program 110 reads and writes data in the main storage unit 102 and the auxiliary storage unit 103.

The program 110 may be provided after being recorded in a computer-readable storage medium. Examples of the storage medium include, but are not limited to, a CD-ROM, a DVD-ROM, and a semiconductor memory. The program 110 may be provided as a data signal via a communication network.

As described above, an operation optimization method according to one aspect of the present disclosure is executed by a computer. An operation optimization method includes: an acquisition step of acquiring a data set including a plurality of parameters and a plurality of factor data other than the plurality of parameters and indicating an operation record of a target system 20; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

An operation optimization program according to one aspect of the present disclosure causes a computer to execute: an acquisition step of acquiring a data set including a plurality of parameters and a plurality of factor data other than the plurality of parameters and indicating an operation record of a target system 20; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

A storage medium according to one aspect of the present disclosure is a computer-readable storage medium. A storage medium records an operation optimization program, the program including: an acquisition step of acquiring a data set including a plurality of parameters and a plurality of factor data other than the plurality of parameters and indicating an operation record of a target system 20; an index setting step of setting a numerical value group of an index to be optimized using at least a part of the plurality of factor data; a first extraction step of extracting, from the numerical value group of the index, a first numerical value group included in a first period and a second numerical value group included in a second period, the first period being a predetermined period, the second period being a part of the first period; a target determination step of determining a target value by using a variation in the first numerical value group, the target value being a variable for optimizing the second numerical value group; a second extraction step of extracting a third numerical value group from the first numerical value group, the third numerical value group being a numerical value group that has achieved the target value; an analysis step of analyzing divergence between a data set corresponding to the third numerical value group and a data set corresponding to the second numerical value group; and an output step of outputting result data created using a data set corresponding to the third numerical value group on the basis of the divergence.

In the operation optimization method, the operation optimization program, and the storage medium according to one aspect of the present disclosure, a numerical value group of an index to be optimized is set using at least a part of the plurality of factor data. The first numerical value group in the first period and the second numerical value group in the second period are extracted from the numerical value group of the index. From the variation in the first numerical value group, a target value that is a variable for optimizing the second numerical value group is determined. Then, the third numerical value group that has achieved the target value is extracted from the first numerical value group. On the basis of the divergence between the data set corresponding to the third numerical value group and the data set corresponding to the second numerical value group, result data created using the data set corresponding to the third numerical value group is output. That is, the third numerical value group of the subset that has achieved the target value (has achieved good efficiency) is extracted from the first numerical value group of the universal set, and the data that causes the divergence between the third numerical value group and the second numerical value group is analyzed from the data set including the plurality of parameters and the plurality of factor data. It can be said that the result data based on the divergence is data aimed at the champion data when the efficiency is good. That is, the result data is data that can optimize the operation of the target system 20. According to the processing of the present disclosure, it is not necessary to create a model such as a physical model, and thus, it is possible to reduce a calculation cost. As a result, the calculation cost of data for optimizing the operation of the target system 20 can be reduced.

The first extraction step extracts the first numerical value group with the first period as entire period, and extracts the second numerical value group with the second period as a period including the latest time information. In this case, the number of data of the first numerical value group of the universal set can be sufficiently secured, and the second numerical value group based on the latest operation of the target system 20 is extracted. As a result, data for optimizing the latest operation of the target system 20 can be output.

The first extraction step narrows down at least a part of the plurality of parameters and the plurality of factor data included in the first period and extracts the first numerical value group using an extraction condition based on at least a part of the plurality of parameters and the plurality of factor data included in the second period. In this case, the first numerical value group is narrowed down on the basis of at least a part of the plurality of parameters and the plurality of factor data in the second period. That is, the first numerical value group when at least a part of the data set is similar to the data set in the second period is extracted. By using such data, the accuracy of optimizing the operation of the target system 20 can be improved.

The first extraction step narrows down at least a part of the plurality of parameters and the plurality of factor data included in the first period and extracts the first numerical value group on the extraction condition that the plurality of parameters and the plurality of factor data included in the first period are normal. In this case, the first numerical value group is narrowed down on the basis of at least a part of the plurality of normal parameters and the plurality of factor data. That is, the first numerical value group based on the normal data is extracted. By using the normal data, the accuracy of optimizing the operation of the target system 20 can be improved.

### [Modifications]

The present disclosure is not necessarily limited to the above-described embodiments, and various alterations can be made without departing from the gist of the present disclosure.

In the above embodiment, an example has been described in which the operation optimization method is applied to optimization (improvement) of heat loss (or fuel consumption) of a coal-fired boiler plant, but the present invention is not limited thereto. The operation optimization method may be applied to optimization of a CO₂ emission amount of a plant, minimization of an environmentally regulated substance, minimization of power consumption of each production facility or line in a factory, improvement of a yield of batch production

(for example, a cast article, a vacuum furnace, or a heated or processed article), improvement of energy consumption of a general-purpose compressor or the like in a factory, or the like.

### [Appendix]

Hereinafter, the gist of the present disclosure will be indicated.
[1] An operation optimization method executed by a computer, including:
   an acquisition step of acquiring a data set including a plurality of parameters and a plurality of factor data other than the plurality of parameters and indicating an operation record of a target system;
   an index setting step of setting a numerical value group of an index to be optimized using at least a part of the plurality of factor data;
   a first extraction step of extracting, from the numerical value group of the index, a first numerical value group included in a first period and a second numerical value group included in a second period, the first period being a predetermined period, the second period being a part of the first period;
   a target determination step of determining a target value by using a variation in the first numerical value group, the target value being a variable for optimizing the second numerical value group;
   a second extraction step of extracting a third numerical value group from the first numerical value group, the third numerical value group being a numerical value group that has achieved the target value;
   an analysis step of analyzing divergence between a data set corresponding to the third numerical value group and a data set corresponding to the second numerical value group; and
   an output step of outputting result data created using a data set corresponding to the third numerical value group on the basis of the divergence.
[2] The operation optimization method according to [1], in which
   the first extraction step extracts the first numerical value group with the first period as an entire period, and extracts the second numerical value group with the second period as a period including latest time information.
[3] The operation optimization method according to [1] or [2], in which
   the first extraction step narrows down at least a part of the plurality of parameters and the plurality of factor data included in the first period using an extraction condition based on at least a part of the plurality of parameters and the plurality of factor data included in the second period, and extracts the first numerical value group.
[4] The operation optimization method according to any one of [1] to [3], in which
   the first extraction step narrows down at least a part of the plurality of parameters and the plurality of factor data included in the first period and extracts the first numerical value group on an extraction condition that the plurality of parameters and the plurality of factor data included in the first period are normal.
[5] An operation optimization program for causing a computer to execute:
   an acquisition step of acquiring a data set including a plurality of parameters and a plurality of factor data other than the plurality of parameters and indicating an operation record of a target system;
   an index setting step of setting a numerical value group of an index to be optimized using at least a part of the plurality of factor data;
   a first extraction step of extracting, from the numerical value group of the index, a first numerical value group included in a first period and a second numerical value group included in a second period, the first period being a predetermined period, the second period being a part of the first period;
   a target determination step of determining a target value by using a variation in the first numerical value group, the target value being a variable for optimizing the second numerical value group;
   a second extraction step of extracting a third numerical value group from the first numerical value group, the third numerical value group being a numerical value group that has achieved the target value;
   an analysis step of analyzing divergence between a data set corresponding to the third numerical value group and a data set corresponding to the second numerical value group; and
   an output step of outputting result data created using a data set corresponding to the third numerical value group on the basis of the divergence.
[6] A computer-readable storage medium in which an operation optimization program is recorded, the program including:
   an acquisition step of acquiring a data set including a plurality of parameters and a plurality of factor data other than the plurality of parameters and indicating an operation record of a target system;
   an index setting step of setting a numerical value group of an index to be optimized using at least a part of the plurality of factor data;
   a first extraction step of extracting, from the numerical value group of the index, a first numerical value group included in a first period and a second numerical value group included in a second period, the first period being a predetermined period, the second period being a part of the first period;
   a target determination step of determining a target value by using a variation in the first numerical value group, the target value being a variable for optimizing the second numerical value group;
   a second extraction step of extracting a third numerical value group from the first numerical value group, the third numerical value group being a numerical value group that has achieved the target value;
   an analysis step of analyzing divergence between a data set corresponding to the third numerical value group and a data set corresponding to the second numerical value group; and
   an output step of outputting result data created using a data set corresponding to the third numerical value group on the basis of the divergence.

### Reference Signs List

- 1: Operation optimization system
- 10: Operation optimization device
- 20: Target system
- 30: External system
- 40: Terminal
- 11: Acquisition unit
- 12: Database
- 13: Index setting unit
- 14: First extraction unit
- 15: Target determination unit
- 16: Second extraction unit
- 17: Analysis unit
- 18: Output unit

## Claims

1. An operation optimization method executed by a computer, comprising:
an acquisition step of acquiring a data set including a plurality of parameters and a plurality of factor data other than the plurality of parameters and indicating an operation record of a target system;
an index setting step of setting a numerical value group of an index to be optimized using at least a part of the plurality of factor data;
a first extraction step of extracting, from the numerical value group of the index, a first numerical value group included in a first period and a second numerical value group included in a second period, the first period being a predetermined period, the second period being a part of the first period;
a target determination step of determining a target value by using a variation in the first numerical value group, the target value being a variable for optimizing the second numerical value group;
a second extraction step of extracting a third numerical value group from the first numerical value group, the third numerical value group being a numerical value group that has achieved the target value;
an analysis step of analyzing divergence between a data set corresponding to the third numerical value group and a data set corresponding to the second numerical value group; and
an output step of outputting result data created using a data set corresponding to the third numerical value group on a basis of the divergence.

2. The operation optimization method according to claim 1, wherein the first extraction step extracts the first numerical value group with the first period as an entire period, and extracts the second numerical value group with the second period as a period including latest time information.

3. The operation optimization method according to claim 1, wherein the first extraction step narrows down at least a part of the plurality of parameters and the plurality of factor data included in the first period using an extraction condition based on at least a part of the plurality of parameters and the plurality of factor data included in the second period, and extracts the first numerical value group.

4. The operation optimization method according to claim 1, wherein the first extraction step narrows down at least a part of the plurality of parameters and the plurality of factor data included in the first period and extracts the first numerical value group on an extraction condition that the plurality of parameters and the plurality of factor data included in the first period are normal.

5. An operation optimization program for causing a computer to execute:
an acquisition step of acquiring a data set including a plurality of parameters and a plurality of factor data other than the plurality of parameters and indicating an operation record of a target system;
an index setting step of setting a numerical value group of an index to be optimized using at least a part of the plurality of factor data;
a first extraction step of extracting, from the numerical value group of the index, a first numerical value group included in a first period and a second numerical value group included in a second period, the first period being a predetermined period, the second period being a part of the first period;
a target determination step of determining a target value by using a variation in the first numerical value group, the target value being a variable for optimizing the second numerical value group;
a second extraction step of extracting a third numerical value group from the first numerical value group, the third numerical value group being a numerical value group that has achieved the target value;
an analysis step of analyzing divergence between a data set corresponding to the third numerical value group and a data set corresponding to the second numerical value group; and
an output step of outputting result data created using a data set corresponding to the third numerical value group on a basis of the divergence.

6. A computer-readable storage medium in which an operation optimization program is recorded, the program comprising:
an acquisition step of acquiring a data set including a plurality of parameters and a plurality of factor data other than the plurality of parameters and indicating an operation record of a target system;
an index setting step of setting a numerical value group of an index to be optimized using at least a part of the plurality of factor data;
a first extraction step of extracting, from the numerical value group of the index, a first numerical value group included in a first period and a second numerical value group included in a second period, the first period being a predetermined period, the second period being a part of the first period;
a target determination step of determining a target value by using a variation in the first numerical value group, the target value being a variable for optimizing the second numerical value group;
a second extraction step of extracting a third numerical value group from the first numerical value group, the third numerical value group being a numerical value group that has achieved the target value;
an analysis step of analyzing divergence between a data set corresponding to the third numerical value group and a data set corresponding to the second numerical value group; and
an output step of outputting result data created using a data set corresponding to the third numerical value group on a basis of the divergence.
